# EUROPÄISCHE PATENTSCHRIFT

(11) **EP 0 728 085 B1**
(45) Veröffentlichungstag und Bekanntmachung des Hinweises auf die Patenterteilung: **28.07.1999**
(21) Anmeldenummer: 95900111.6
(22) Anmeldetag: 04.11.1994
(51) Int. Cl.: B60T 8/36, B60T 8/50

(54) **ELEKTROMAGNETVENTIL, INSBESONDERE FÜR HYDRAULISCHE BREMSANLAGEN MIT SCHLUPFREGELUNG**
SOLENOID VALVE FOR, IN PARTICULAR, HYDRAULIC BRAKE SYSTEMS WITH SLIP CONTROL
VALVE ELECTROMAGNETIQUE, EN PARTICULIER POUR SYSTEMES DE FREINAGE HYDRAULIQUES AVEC ANTI-PATINAGE

(30) Priorität: 18.11.1993 DE 4339305
(43) Veröffentlichungstag der Anmeldung: 28.08.1996
(73) Patentinhaber: Continental Teves AG & Co. oHG, 60488 Frankfurt (DE)
(72) Erfinder: VOLZ, Peter, D-64291 Darmstadt (DE); ZAVISKA, Dalibor, D-65760 Eschborn (DE)
(86) Internationale Anmeldenummer: EP9403622
(87) Internationale Veröffentlichungsnummer: WO9513945

(56) Entgegenhaltungen:
- EP-A- 0 181 643
- EP-A- 0 317 305
- WO-A-91/18774

## Beschreibung

Die Erfindung betrifft ein Elektromagnetventil, insbesondere für hydraulische Bremsanlagen mit Schlupfregelung nach dem Oberbegriff des Anspruchs 1.

Die diskontinuierliche Druckmittelsteuerung bei schlupfgeregelten Bremsanlagen mittels digital schaltbaren Einlaß- und Auslaßventilen führt infolge des impulsartigen Druckverlaufs zur unerwünschten Schallemission.

Bei der in der nicht vorveröffentlichten DE-A-4319227 beschriebenen Bremsanlagen hat es sich gezeigt, daß die vorgeschlagenen Lösung zur Anordnung des mit der schaltbaren Blende versehenen Ringkolbens im Einlaßventil, ein ungewolltes Schalten des Ringkolbens in die Blendenstellung bei manueller, schlupffreier Bremsbetätigung nicht immer vermieden werden kann. Insbesondere bei schneller Betätigung der Bremse (Panikbremsung) kann nicht mit hinreichender Sicherheit eine unerwünschte vorzeitige Axtivierung der dem Einlaßventil zugeordneten schaltbaren Blende ausgeschlossen werden, so daß das Pedalgefühl und der fahrzeugspezifische Druckaufbaugradient verändert wird. Eine durch die Blendenwirkung hervorgerufene Verringerung des Druckaufbaugradienten führt zwangsläufig zu einer Minderung der Bremsleistung.

Deshalb wird in der nicht vorveröffentlichten DE-A-43 32 819 vorgeschlagen, stromaufwärts bzw. stromabwärts zum Elektromagnetventil (Einlaßventil) zusätzlich Festblenden anzuordnen, jedoch mit dem Ergebnis, daß der Umschaltdruck, bzw. die Schaltdruckdifferenz der schaltbaren Blende relativ hoch bleibt, was während der Bremsdruckregelung zu unerwünschten Volumenstromschwankungen führen kann.

Aus der EP-A-0317305 ist bereits ein Elektromagnetventil bekannt geworden, das zur Verwendung für blockiergeschützte hydraulische Bremsanlagen geeignet ist. Das Elektromagnetventil ist mit einem eine Spule aufnehmenden Magnetkern versehen, der auf der einen Seite von einem Magnetanker und auf der anderen Seite von einem Membrankörper begrenzt ist, wobei der Membrankörper einen Durchlaß aufweist, der von einer Ventilnadel verschließbar ist. Der Membrankörper ist axial beweglich zwischen dem Magnetkern und einem den Druckmitteleinlaß aufweisenden Gehäusedeckel eingespannt, so daß in der den Zulaufkanal im Membrankörper verschließenden Schaltstellung der Ventilnadel beiderseits des Membrankörpers eine Druckdifferenz wirksam ist, die zu einer Relativverschiebung der Ventilnadel gegenüber dem Magnetanker führt. Hierdurch ist eine zwischen der Ventilnadel und dem Magnetanker angeordnete Druckfeder vorgespannt. Die durch die Druckdifferenz am Membrankörper verursachte Druckfeder-Vorspannkraft führt bei einer Unterbrechung der elektromagnetischen Erregung zu einem raschen Lösen des Magnetankers vom Magnetkern. Dies führt zu kleinen Ventilöffnungszeiten. Eine auf die Ventilnadel im Öffnungssinne wirksame Federrückstellkraft begünstigt die schnelle Freigabe des Zulaufkanals im Membrankörper, so daß Druckmittel nach dem Passieren des freien Durchgangs an der Ventilnadel zu einem Ringspalt gelangt, der zwischen der hohlzylinderförmigen Innenwandung des Magnetkerns und der Außenwandung eines die Ventilnadel führenden Zylinderteils gebildet ist. Das somit vom Ventileinlaß kommende Fluid gelangt über den Zulaufkanal im Membrankörper und dem nachgeordneten Ringspalt in eine zum Druckmittelverbraucher führende Druckmittelverbindung.

Daher ist es die Aufgabe der Erfindung, unter Beibehaltung eines möglichst unveränderten einfachen Aufbaus der bekannten Elektromagnetventile, einen Lösungsweg aufzuzeigen, der ein vorzeitiges, unerwünschtes Aktivieren der schaltbaren Blende in der schlupffreien Normalbremsphase verhindert.

Diese Aufgabe wird erfindungsgemäß durch die kennzeichnenden Merkmale des Patentanspruchs 1 gelöst.

Durch die erfindungsgemäße Konstruktion wird das unmittelbar am engsten Strömungsquerschnitt entstehende Druckgefälle zum Halten des Ringkolbens in der deaktivierten Schaltstellung genutzt, um das vorzeitige Schalten des Ringkolbens in die Blendenstellung während einer schlupffreien Normalbremsung zu verhindern.

Weitere Merkmale, Vorteile und Anwendungsmöglichkeiten der

Erfindung gehen aus der nachfolgenden Beschreibung mehrerer Ausführungsbeispiele hervor.

Es zeigen:
- Figur 1: eine Teilansicht eines elektromagnetischen Einlaßventils in vergrößerter Darstellung, mit der erfindungsgemäßen Kanalanordnung unterhalb des Ventilschließgliedes,
- Figur 2: eine weitere alternative Ausführungsform von Einzelheiten innerhalb des Einlaßventils.
- Figur 3: eine hinsichtlich des Dichtsitzes und der Blende am Blendenkolben geänderte Variante des in Figur 2 gezeigten Einlaßventils.

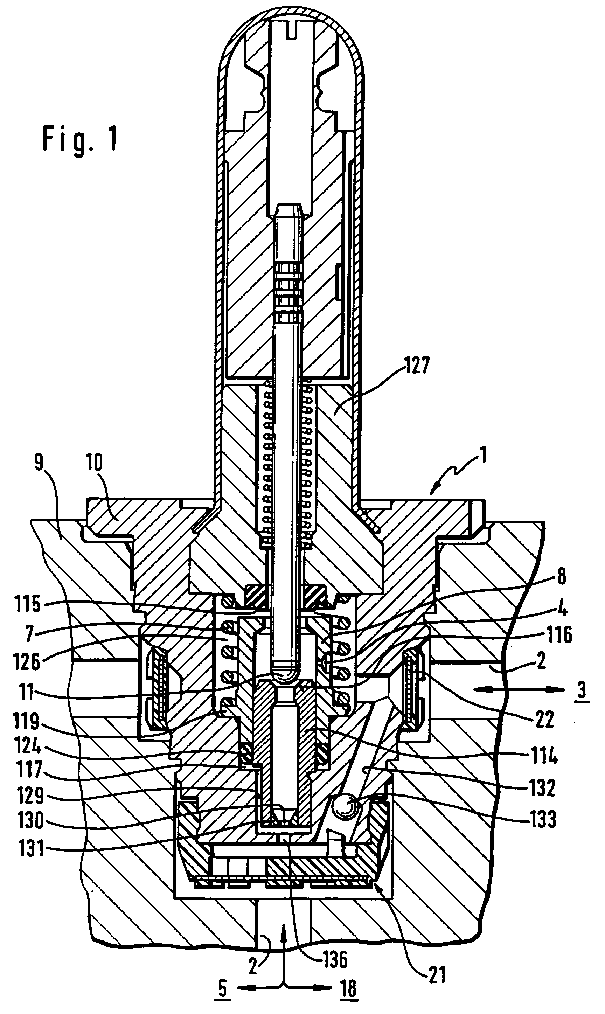

Die Figur 1 zeigt ein konstruktives Ausführungsbeispiel zum Gesamtaufbau des Einlaßventils 1 für eine schlupfgeregelte Bremsanlage im Längsschnitt. Das Einlaßventil 1 weist einen Ventilträger 10 auf, der das Ventilschließglied 11 und die Kanalführung der vom Bremsdruckgeber 5 und der Hilfsdruckpumpe 18 kommenden Hauptdruckleitung 2 beinhaltet. Der Ventilträger 10 ist vorzugsweise in Patronenbauweise (Einschraubpatrone, Verstemmpatrone, Patrone mit Spreizring) in einem Ventilaufnahmekörper 9 integriert. In der gewählten Darstellung des Ventilbefestigungssystems ist der Ventilträger 10 mittels einer zweifachen Selbstverstemmung im Ventilaufnahmekörper 9 befestigt. Die Abdichtung des Ventilträgers 10 im Ventilaufnahmekörper 9 ist durch die Selbstverstemmung gewährleistet. Es besteht eine Druckmittelverbindung über die Hauptdruckleitung 2, die am Bremsdruckgeber 5 und der Hilfsdruckpumpe 18 angeschlossen ist, durch einen am Fortsatz des Ventilträgers 10 aufgeclipsten Plattenfilter 21 und über das in der Grundstellung offen geschaltete Ventilschließglied 11 zum Ringkolben 8. Von dort gelangt Druckmittel über den offenen Ringspalt am Magnetkern 127 sowie auch im geringen Umfang über die Blende 4 in Richtung des dem Anschluß zur Radbremse 3 vorgeschalteten Ringfilters 22. Am Magnetkern 127 steht eine Ventilhülse über, auf die eine in der Abbildung nicht explizit dargestellte Ventilspule gestülpt ist. Die Ventilhülse bildet mit dem Magnetkern eine im Ventilträger 10 verstemmte Einheit. Ein mit einem Magnetanker versehener Ventilstößel ragt durch den Magnetkern 127 bis zum Ventilsitz 116 und bildet am Endbereich das Ventilschließglied 11.

Der Ringkolben 8 übernimmt infolge einer Querbohrung in der Ringkolbenwandung die schaltbare Blendenfunktion. Dieser ist auf dem Fortsatz des den Ventilsitz 116 aufweisenden rotationssymmetrischen Zentralkörpers 114 im Ringraum 126 axial beweglich geführt. Der Ringkolben 8 stützt sich unter Wirkung einer Druckfeder 7 mit seinem als Anschlag wirksamen äußeren Bund 119 an der Bohrungsstufe des Ringraums 126 im Ventilträger 10 ab. Der Ringkolben 8 weist im wesentlichen die Form einer Hülse auf, die an ihrer dem Magnetkern 127 zugewandten Stirnfläche den mit einem Gummidichtsitz 115 versehenen Stirnbereich des Magnetkerns 127 gegenüberliegt. Bei Wunsch oder Bedarf kann die Abdichtung auch als metallische Flachdichtung oder mit einem im Stirnflächenbereich des Ringkolbens 8 eingefaßten O-Ring ausgeführt sein.

Auf der vom Magnetkern 127 abgewandten Stirnseite des Ringkolbens 8 befindet sich im Zwischenraum 117 ein Dichtring 124, der ein Überströmen von Druckmittel vom Bremsdruckgeber 5 in Richtung der Radbremse 3 verhindert.

Der Zwischenraum 117 steht über eine Kanalabzweigung 129, die sich zwischen dem Zentralkörper 114 und dem Ventilträger 10 erstreckt, mit einer im unteren Bereich des Zentralkörpers 114 vorgesehenen Querschnittsverengung 130 in Verbindung, die vorzugsweise durch einen Blendeneinsatz 131 entstanden ist. Der sich mit seinem Fortsatz in den Innenraum des Ventils erstreckende rotationssymmetrische Zentralkörper 114 ist in die Stufenbohrung des Ventilträgers 10 eingepreßt bzw. verstemmt. In der gezeigten Ausführungsform ist der Ventilsitz 116 als integrales Bestandteil der koaxial zum Ventilschließglied 11 verlaufenden Bohrung des Zentralkörpers 114 ausgeführt. Der Zentralkörper 114 ist als gestuftes Hülsenteil mittels einer Selbstverstemmung im Ventilträger 10 gehalten. Ein schräg zum Zentralkörper 114 im Ventilträger 10 verlaufender Druckmittelpfad 132 weist ein in Richtung der Radbremse 3 sperrendes Rückschlagventil 133 auf, das über einen zwischen dem Ventilträger 10 und dem Ventilaufnahmekörper 9 beabstandeten Ringfilter 22 sowie mittels wenigstens einem in der Abbildung erkennbaren Freigang am Plattenfilter 21 eine die Flüssigkeit filtrierende Druckmittelverbindung zwischen der Radbremse 3 und dem Bremsdruckgeber 5 bzw. der Hilfsdruckpumpe 18 ermöglicht.

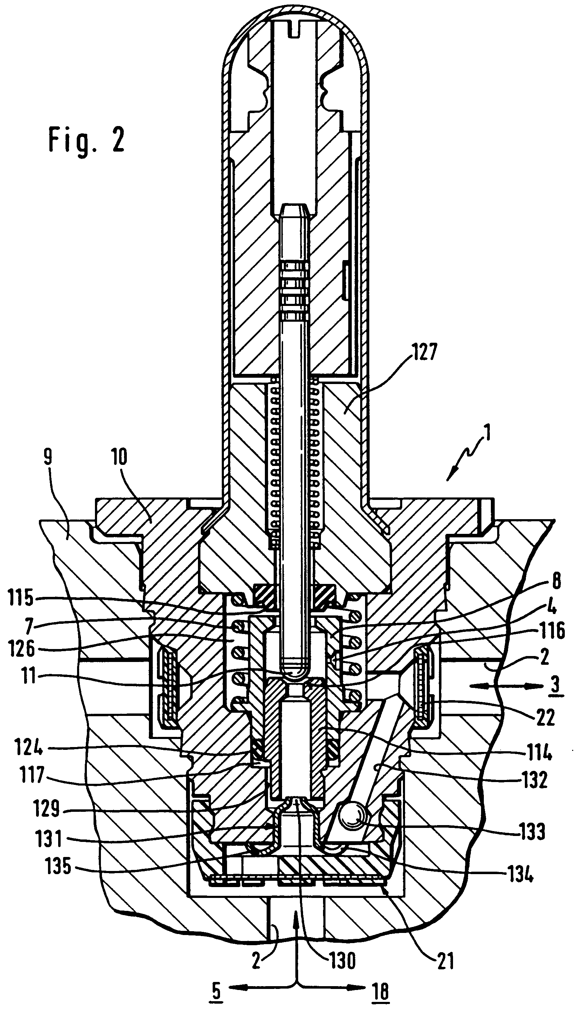

Die Figur 2 zeigt abweichend von Figur 1 eine spezielle Ausgestaltung der Kanalverengung 130 mittels eines Blendeneinsatzes 131, der im wesentlichen die Kontur einer Düse aufweist und als dünnwandiger Formkörper, vergleichbar mit einem Venturirohr, gestaltet ist. Der Blendeneinsatz 131 weist einen mit Ausnehmungen 134 versehenen Bund 135 auf, der zwischen dem Plattenfilter 21 und dem Ventilträger 10 eingespannt ist. Die Ausnehmung 134 ist derart gestaltet, daß sie das Rückschlagventil 133 im Druckmittelpfad 132 teilweise überdeckt, um das Rückschlagventil 133 im Druckmittelpfad 132 zu halten. Der Blendeneinsatz 131 ist vorzugsweise als Dünnblech-Preßteil oder Kunststoff-Spritzgußteil ausgeführt. Die Kanalverengung ist einerseits innerhalb des Blendeneinsatzes 131 als Kreisquerschnitt auf den Druckmittelstrom des Bremsdruckgebers 5 bzw. der Hilfsdruckpumpe 18 wirksam, andererseits bewirkt die Ausformung des Blendeneinsatzes 131 als Düsenmundstück einen verjüngten Ringquerschnitt im Bereich der Einmündung der Kanalabzweigung 129 in den Hauptstrom der Hauptdruckleitung 2.

Alle aus der bildlichen Darstellung von Figur 2 ersichtlichen weiteren Elemente entsprechen im wesentlichen dem Aufbau und der Funktion nach Figur 1.

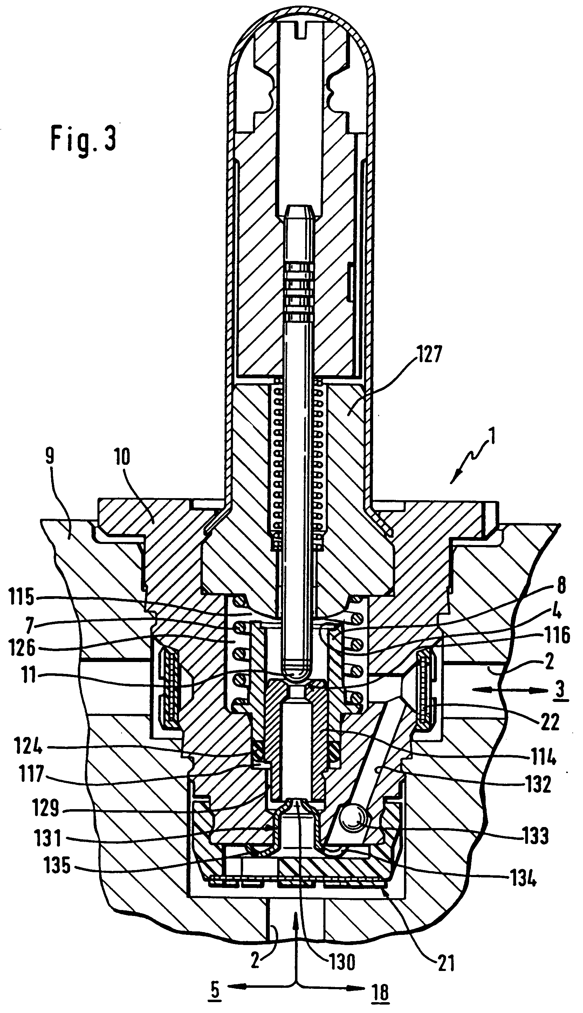

Die Figur 3 zeigt abweichend von Figur 2 eine metallische Abdichtung der Stirnfläche am Ringkolben 8, wenn dieser infolge einer Druckdifferenz an seinen beiden Stirnflächen, entgegen der Wirkung der Druckfeder 7, in Richtung des Magnetkerns 127 bewegt wird. Der Dichtsitz 115 am Magnetkern 127 ist vorzugsweise ballig oder kugelförmig in Richtung des Ringkolbens 8 ausgeformt, so daß sich eine Ringdichtfläche ergibt. Eine besonders einfache Realisierung der Blende 4 im Ringkolben 8 ergibt sich, wenn anstatt einer Bohrung die Blende 4 als Kerbe in die Stirnfläche des Ringkolbens 8 eingeformt ist. Damit ergibt sich die gewünschte Blendenfunktion am Ringkolben 8, sobald dieser am metallischen Dichtsitz 115 anliegt. Abrieb oder Schmutzpartikel können, im Gegensatz zu den Ausführungsformen als Blendenbohrungen nach Figur 1 u. 2, nicht zu einer Verstopfung der Kerbe führen, da diese einer Selbstreinigungsfunktion durch das Öffnen und Schließen des Ringkolbens 8 ausgesetzt ist. Alle weiteren in Figur 3 gezeigten Einzelheiten sind der Beschreibung zu den vorangegangenen Ausführungsbeispielen zu entnehmen.

Nachfolgend wird die Funktionsweise der Erfindung erläutert:

Während einer nicht geregelten, schlupffreien Normalbremsphase befindet sich das Einlaßventil 1 in der elektromagnetisch nicht erregten, offenen Grundstellung. Bei einer Betätigung des Bremsdruckgebers 5 wird ein steigender Druckaufbaugradient im Einlaßventil 1 initiiert, der in der Kanalverengung 130 zu einer erheblich anwachsenden Strömungsgeschwindigkeit führt, die in der im wesentlichen spaltförmigen Kanalabzweigung 129 in Richtung des Zwischenraums 117 ein Druckgefälle einstellt. Dieses Druckgefälle ist auch über den Dichtring 124 am Ringkolben 8 wirksam. Durch die erhöhte Druckdifferenz zwischen den beiden Stirnflächen am Ringkolben 8 erhält die den Ringkolben 8 in Ruhestellung haltende Druckfeder 7 eine hydrodynamische Unterstützung, so daß auch in der schnellen Anbremsphase eine ungehinderte Druckmittelverbindung zwischen dem Dichtsitz 115 und der Stirnfläche des Reglerkolbens 8 besteht. Der Ringkolben 8 bleibt somit in der abbildungsgemäßen Ruhestellung an der Bohrungsstufe auf Anschlag, so daß der Bremsdruck sich ungehindert zur Radbremse 3 fortpflanzen kann. Die unerwünschte vorzeitige Aktivierung der im Ringkolben 8 integrierten Blende 4 unterbleibt.

Beim Lösen des Bremspedals wird der Bremsdruck in umgekehrter Richtung über das offene Ventilschließglied 11 und über das Rückschlagventil 133 in Richtung des Bremsdruckgebers 5 wieder abgebaut.

Überschreitet bei geschlossenem Einlaßventil während einer Bremsschlupfregelung die Druckdifferenz zwischen dem Ventileinlaß (Hauptzylinder-/Pumpendruck) und Ventilausgang (Radbremsdruck) einen durch die Druckfeder 7 eingestellten Wert, so wird der Ringkolben 8 infolge der resultierenden Druckkraft am Dichtring 124 gegen die Federkraft verschoben und kommt am Magnetkern 127 dichtend zur Anlage. Eine Druckmittelverbindung zur Radbremse 3 besteht somit ausschließlich über die Blende 4 des Ringkolbens 8.

Öffnet das Einlaßventil 1 wieder seinen regulären Durchgang über das Ventilschließglied 11, so gelangt das nachströmende Fluid von der im ABS-Betrieb befindlichen Hilfsdruckpumpe 18 ausschließlich über die Blende 4 im Ringkolben 8 zur Radbremse 3 und wird derart abgebremst, daß beim nachfolgenden wiederholten Schließen des Einlaßventils 1 der Druckstoß und damit das Geräusch reduziert ist. Beim Unterschreiten der zur Betätigung des Ringkolbens 8 notwendigen Schaltdruckdifferenz sowie beim Unterbrechen des Bremsvorgangs gelangt der Ringkolben 8 wieder in die den Strömungsdurchlaß vergrößernde Ausgangsstellung zurück.

Zusammenfassend wird festgestellt, daß der Einfluß der Druckaufbaugeschwindigkeit bei manueller Bremsbetätigung durch die Erfindung vernachlässigbar gering ist, da zwangsläufig mit zunehmender Druckaufbaugeschwindigkeit das sich am Ringkolben einstellende Druckgefälle bzw. die Druckdifferenz im verengten Strömungsquerschnitt und damit auch in der verengten Kanalabzweigung zunimmt, womit die schaltbare Blende in jedem Falle in der Normalbremsphase und damit bei geöffnetem Ventilschließglied wirkungslos verharrt. Damit kann auch der Umschaltdruck, bei dem der Ringkolben in der Bremsschlupfregelung aktiviert wird, erheblich gesenkt werden, wodurch sich vorteilhaft auch die Volumenstromschwankungen zum Zwecke einer guten Regelgüte während der Bremsschlupfregelung gering halten lassen. Zwangsläufig vermindern sich die Ventilgeräusche gegenüber den bisher vorgeschlagenen Lösungen und der Druckaufbaugradient kann Wunsch oder Bedarf für den manuell gesteuerten, blockierfreien Bremsenbetrieb vergrößert werden.

### Bezugszeichenliste

- 1: Einlaßventil
- 2: Hauptdruckleitung
- 3: Radbremse
- 4: Blende
- 5: Bremsdruckgeber
- 7: Druckfeder
- 8: Ringkolben
- 9: Ventilaufnahmekörper
- 10: Ventilträger
- 11: Ventilschließglied
- 21: Plattenfilter
- 22: Ringfilter
- 114: Zentralkörper
- 115: Dichtsitz
- 116: Ventilsitz
- 117: Zwischenraum
- 124: Dichtring
- 126: Ringraum
- 127: Magnetkern
- 129: Kanalabzweigung
- 130: Kanalverengung
- 131: Blendeneinsatz
- 132: Druckmittelpfad
- 133: Rückschlagventil
- 134: Ausnehmung
- 135: Bund
- 136: Festblende

## Patentansprüche

1. Elektromagnetventil, insbesondere für hydraulische Bremsanlagen mit Schlupfregelung, mit einem Ventilträger (10), der in einem Ringraum (126) ein Ventilschließglied (11) aufweist, das mit einem im Ventilträger (10) angeordneten Ventilsitz (116) korrespondiert, mit einer schaltbaren Blende (4), die in einer ersten Schaltstellung einen ungehinderten hydraulischen Durchlaß im Elektromagnetventil herstellt und in einer weiteren Schaltstellung den Druckmitteldurchlaß im Elektromagnetventil begrenzt, wobei die schaltbare Blende Bestandteil eines im Elektromagnetventil integrierten Ringteils ist, dadurch gekennzeichnet, daß ein stromaufwärts zum Ventilsitz (116) angeordneter Druckmittelkanal eine Kanalverengung (130) aufweist, daß das Ringteil einen Ringkolben (8) aufweist, daß in den Druckmittelkanal (2) stromaufwärts zum Ventilsitz (116) eine bis in einen an einer Stirnfläche des Ringkolbens (8) vorgesehenen Zwischenraum (117) sich erstreckende Kanalabzweigung (129) mit geringer Nennweite einmündet, die zur Kanalverengung (130) führt, so daß in der Kanalverengung (130) ein Teil der Druckenergie einer Druckmittelsäule in kinetische Energie umgewandelt ist und sich in der zu der Stirnfläche des Ringkolbens (8) führenden Kanalabzweigung (129) ein Druckgefälle einstellt.

2. Elektromagnetventil nach Anspruch 1, dadurch **gekennzeichnet**, daß der Ventilsitz (116) in einem hülsenförmigen Zentralkörper (114) angeordnet ist, der im Ventilträger (10) eingesetzt ist, und daß der Zentralkörper (114) die Kanalverengung (130) aufnimmt.

3. Elektromagnetventil nach Anspruch 1 oder 2, dadurch **gekennzeichnet**, daß zwischen dem Zentralkörper (114) und dem Ventilträger (10) die Kanalabzweigung, vorzugsweise in Form eines Druckmittelspaltes, geführt ist, die in den von einer Stirnfläche des Ringkolbens (8) begrenzten Zwischenraum (117) einmündet.

4. Elektromagnetventil nach mindestens einem der vorhergehenden Ansprüche, dadurch **gekennzeichnet**,
daß die der Kanalabzweigung (129) zugewandte Stirnfläche am Ringkolben (8) von einer Ringdichtung (124) im Zwischenraum (117) begrenzt ist.

5. Elektromagnetventil nach mindestens einem der vorhergehenden Ansprüche 1 bis 4, dadurch **gekennzeichnet**, daß die Kanalabzweigung (129) zwischen einer im Ventilträger (10) angeordneten Festblende (136) und der sich in den Zentralkörper (114) erstreckenden Kanalverengung (130) einmündet.

6. Elektromagnetventil nach Anspruch 1, dadurch **gekennzeichnet**, daß die Kanalverengung (130) stromaufwärts innerhalb der Hauptdruckleitung (2) im Ventilaufnahmekörper (9) angeordnet ist.

7. Elektromagnetventil nach einem der vorhergehenden Ansprüche, dadurch **gekennzeichnet**, daß die Kanalverengung (130) durch einen Blendeneinsatz (131) gebildet ist.

8. Elektromagnetventil nach Anspruch 7, dadurch **gekennzeichnet**, daß der Blendeneinsatz (131) aus einem im wesentlichen die Kontur einer Düse aufweisenden dünnwandigen Formkörper besteht, der vorzugsweise reibschlüssig im Ventilträger (10) befestigt ist.

9. Elektromagnetventil nach Anspruch 7, dadurch **gekennzeichnet**, daß der Blendeneinsatz (131) einen Bund (135) aufweist, der zwischen einen am Ventilträger (10) befestigten Plattenfilter (21) und dem Ventilträger (10) eingespannt ist.

10. Elektromagnetventil nach Anspruch 9, dadurch **gekennzeichnet**, daß der Bund (135) wenigstens eine Ausnehmung (134) besitzt, die einen zum Ventilschließglied (11) parallel geschalteten Druckmittelpfad (132) freigibt.

11. Elektromagnetventil nach Anspruch 10, dadurch **gekennzeichnet**, daß der Bund (135) den Druckmittelpfad (132) teilweise überdeckt, in dem ein in Richtung des Bunds (135) öffnendes Rückschlagventil (133) eingesetzt ist.

## Claims

1. Solenoid valve, especially for hydraulic brake systems with slip control, with a valve support (10) that includes in an annular space (126) a valve-closing member (11) which corresponds with a valve seat (116) arranged in the valve support (10), with a switchable diaphragm (4) which establishes an unimpeded hydraulic passage of pressurized medium in the solenoid valve in a first switching position and limits the passage of pressurized medium in the solenoid valve in another switching position, wherein the switchable diaphragm is a portion of an annular part integrated within the solenoid valve,
**characterized** in that a pressurized medium channel arranged upstream of the valve seat (116) has a channel constriction (130), in that the annular part has an annular piston (8), in that a channel branch (129) of small nominal diameter, which extends into a space (117) provided on one front surface of the annular piston (8) and leads to a channel constriction (130), opens into the pressurized medium channel (2) upstream of the valve seat (116), so that part of the pressure energy of a pressurized medium column is converted into kinetic energy in the channel constriction (130) and a pressure gradient is produced in the channel branch (129) which leads to the front surface of the annular piston (8).

2. Solenoid valve as claimed in claim 1,
**characterized** in that the valve seat (116) is arranged in a sleeve-like central body (114) which is inserted into the valve support (10), and in that the central body (114) accommodates the channel constriction (130).

3. Solenoid valve as claimed in claim 1 or 2,
**characterized** in that the channel branch extends between the central body (114) and the valve support (10), preferably in the form of a pressurized medium gap, and it opens into the space (117) limited by one front surface of the annular piston (8).

4. Solenoid valve as claimed in at least one of the preceding claims,
**characterized** in that the front surface of the annular piston (8) facing the channel branch (129) is limited by a sealing ring (124) in the space (117).

5. Solenoid valve as claimed in at least one of the preceding claims 1 to 4,
**characterized** in that the channel branch (129) opens between a fixed diaphragm (136) arranged in the valve support (10) and the channel constriction (130) extending into the central body (114).

6. Solenoid valve as claimed in claim 1,
**characterized** in that the channel constriction (130) is arranged upstream within the main pressure line (2) in the valve-mounting body (9).

7. Solenoid valve as claimed in any one of the preceding claims,
**characterized** in that the channel constriction (130) is formed by a diaphragm insert (131).

8. Solenoid valve as claimed in claim 7,
**characterized** in that the diaphragm insert (131) is formed of a thin-walled shaped body having essentially the contour of a nozzle and is fastened in the valve support (10), preferably in a frictionally engaged manner.

9. Solenoid valve as claimed in claim 7,
**characterized** in that the diaphragm insert (131) has a shoulder (135) which is compressed between a plate filter (21), fastened to the valve support (10), and the valve support (10).

10. Solenoid valve as claimed in claim 9,
**characterized** in that the shoulder (135) has at least one recess (134) which opens a pressurized medium path (132) connected in parallel to the valve-closing member (11).

11. Solenoid valve as claimed in claim 10,
**characterized** in that the shoulder (135) partially covers the pressurized medium path (132) into which a check valve (133) opening in the direction of the shoulder (135) is inserted.

## Revendications

1. Electrovanne, plus particulièrement destinée à des systèmes de freinage hydrauliques à commande du glissement, comprenant un porte-soupape (10) qui dans un espace annulaire (126) comporte un organe (11) de fermeture de soupape correspondant à un siège de soupape (116) agencé dans le porte-soupape (10), un diaphragme commutable (4) qui dans une première position de commutation établit un passage de fluide hydraulique sans obstacles ou libre dans l'électrovanne et dans une autre position de commutation limite le passage du milieu sous pression dans l'électrovanne, dans laquelle le diaphragme commutable fait partie d'un élément annulaire intégré dans l'électrovanne**, caractérisée** en ce qu'un canal de milieu sous pression disposé en amont du siège de soupape (116) présente un étranglement (130) de canal, en ce que l'élément annulaire comporte un piston annulaire (8), en ce que dans le canal (2) de milieu sous pression situé en amont du siège de soupape (116) débouche une branche de canal (129) ayant une faible section nominale de passage s'étendant jusque dans un espace intermédiaire (117) prévu sur une face avant du piston annulaire (8), laquelle branche de canal mène à l'étranglement (130) de canal, de sorte que dans l'étranglement de canal (130) une partie de l'énergie de pression d'une colonne de milieu sous pression est transformée en énergie cinétique, et une chute de pression se produit dans la branche de canal (129) menant à la face avant du piston annulaire (8).

2. Electrovanne selon la revendication 1, **caractérisée** en ce que le siège de soupape (116) est agencé dans un corps central (114) en forme de douille qui est inséré dans le porte-soupape (10), et en ce que le corps central (114) reçoit l'étranglement de canal (130).

3. Electrovanne selon la revendication 1 ou 2, **caractérisée** en ce qu'entre le corps central (114) et le porte-soupape (10) est menée la branche de canal, de préférence sous forme d'une fente pour milieu sous pression, qui débouche dans l'espace (117) délimité par une face avant du piston annulaire (8).

4. Electrovanne selon au moins l'une des revendications précédentes, **caractérisée** en ce que la face avant du piston annulaire (8) tournée vers la branche de canal (129) est délimitée par un joint d'étanchéité torique (124) dans l'espace (117).

5. Electrovanne selon au moins l'une des revendications précédentes 1 à 4, **caractérisée** en ce que la branche de canal (129) débouche entre un diaphragme fixe (136) agencé dans le porte-soupape (10) et l'étranglement de canal (130) s'étendant dans le corps central (114).

6. Electrovanne selon la revendication 1, **caractérisée** en ce que l'étranglement de canal (130) est disposé en amont à l'intérieur de la ligne principale de pression (2) dans le corps (9) de réception de soupape.

7. Electrovanne selon l'une des revendications précédentes, **caractérisée** en ce que l'étranglement de canal (130) est formé par une monture porte-diaphragme (131).

8. Electrovanne selon la revendication 7, **caractérisée** en ce que la monture porte-diaphragme (131) comprend un corps profilé à parois minces ayant sensiblement le profil d'un injecteur, qui est fixé de préférence de manière fermée par frottement dans le porte-soupape (10).

9. Electrovanne selon la revendication 7, **caractérisée** en ce que la monture porte-diaphragme (131) présente un rebord (135) qui est encastré entre un filtre à plaques (21) fixé au porte-soupape (10) et le porte-soupape (10).

10. Electrovanne selon la revendication 9**, caractérisée** en ce que le rebord (135) possède au moins un évidement (134), qui libère un passage pour le milieu sous pression monté parallèlement à l'organe (11) de fermeture de soupape.

11. Electrovanne selon la revendication 10, **caractérisée** en ce que le rebord (135) recouvre partiellement le passage (132) pour le milieu sous pression, dans lequel est monté un clapet anti-retour (133) s'ouvrant en direction du rebord (135).
